# EUROPÄISCHE PATENTSCHRIFT

(11) **EP 0 616 864 B1**
(45) Veröffentlichungstag und Bekanntmachung des Hinweises auf die Patenterteilung: **23.04.1997**
(21) Anmeldenummer: 94250012.5
(22) Anmeldetag: 25.01.1994
(51) Int. Cl.: B22D 11/04

(54) **Breitenverstellbare Stranggiesskokille**
Apparatus for the adjustment of a continuous casting mould
Dispositif de réglage de lingotière de coulée continue

(30) Priorität: 22.03.1993 DE 4309592
(43) Veröffentlichungstag der Anmeldung: 28.09.1994
(73) Patentinhaber: MANNESMANN Aktiengesellschaft, 40213 Düsseldorf (DE)
(72) Erfinder: Brückner, Klaus, D-42781 Haan (DE)
(74) Vertreter: Meissner, Peter E., Dipl.-Ing.

(56) Entgegenhaltungen:
- EP-A- 0 107 564
- EP-A- 0 312 889
- DE-A- 3 833 014
- DE-A- 3 838 010
- DE-C- 3 640 096

## Beschreibung

Die Erfindung bezieht sich auf eine Stranggießkokille gemäß Oberbegriff des Anspruchs 1, insbesondere auf die Ausbildung von Schmalseitenplatten, die zwischen Breitseitenplatten einer breitenverstellbaren Stranggießkokille angeordnet sind und durch auf die Breitseitenplatten aufgebrachte Klemmkräfte gehalten werden.

Eine derartige, aus Platten gebildete Stranggießkokille ist im Prinzip aus der DE 27 02 976 C2 bekannt.

Weiter sind aus den EP 0 107 564 A1, DE 38 38 010 A1 und DE 36 40 096 C1 Stranggießkokillen zum Verstellen des Strangformates während des laufenden Gießbetriebes an einer Stranggießanlage bekannt, wobei die Möglichkeit gegeben ist, die Schmalseitenwände zwischen den Breitseitenwänden festzuklemmen und nach dem Lösen der Klemmung, z.B. durch Beaufschlagung der Druckmittelzylinder einen Spalt zwischen den Breitseitenwänden und den Schmalseitenwänden hervorzurufen, so daß die Schmalseitenwände gegenüber den Breitseitenwänden verstellt werden können.

Bei auf eine bestimmte Brammenbreite und bei gegebener Gießgeschwindigkeit auf eine bestimmte Konizität eingestellten Schmalseitenplatten kann es jedoch infolge von Schwankungen im Produktionsablauf, wie geänderter Schmelzentemperatur oder veränderter Kühlbedingungen in der Kokille zu unvorhersehbaren thermischen Längenänderungen der Breitseitenplatten kommen. Beim Angießen, also beim Auffüllen der Kokille, ist der Einfluß besonders stark, da im oberen Kokillenbereich aufgrund der höheren Wärmebelastung sich höhere Temperaturen einstellen als am Kokillenausgang. Da sowohl die Breitseitenplatten als auch die Schmalseitenplatten innerhalb eines starren Kokillenrahmens angeordnet sind, kommt es aufgrund der thermischen Längenänderung der Breitseitenplatten zu einer Verschiebung der Schmalseitenplatten, wobei die eingestellte Konizität der Schmalseitenplatten verändert wird. Übersteigen die durch die thermische Längenänderung hervorgerufenen Kräfte die Anpreßkräfte, so kann es durch das Verschieben der Schmalseitenplatten im Verhältnis zu den Breitseitenplatten zu Abnutzungserscheinungen an den Kupferplatten der Breitseitenplatten kommen. In jedem Fall stellt sich ein Ergebnis ein, das dem Stranggießer unerwünscht ist.

Diese Erscheinung ist dem Stranggießer an sich bekannt und man hat diesem Sachverhalt dadurch zu begegnen versucht, daß bei nicht breitenverstellbaren Kokillen zwischen den Breitseitenplatten und den Randbereichen der anliegenden Schmalseitenplatten Einsatzstücke angeordnet wurden, die sich über die Höhe der Kokille erstrecken (s. DAS 19 39 777).

Die Erfindung befaßt sich mit diesem Problem bei breitenverstellbaren Stranggießkokillen und strebt eine Lösung an, mit der die geschilderten Nachteile vermieden und die einmal eingestellte Konizität der Schmalseitenplatten während des Gießens auch bei geänderten Betriebsbedingungen erhalten bleibt und Beschädigungen der Breitseitenplatte vermieden werden.

Die Erfindung löst dieses Problem mit den im Hauptanspruch angegebenen Merkmalen. Vorteilhafte Ausgestaltungen der Erfindung sind in den Unteransprüchen enthalten.

Anhand der beigefügten Zeichnungen Soll die Erfindung näher erläutert werden.

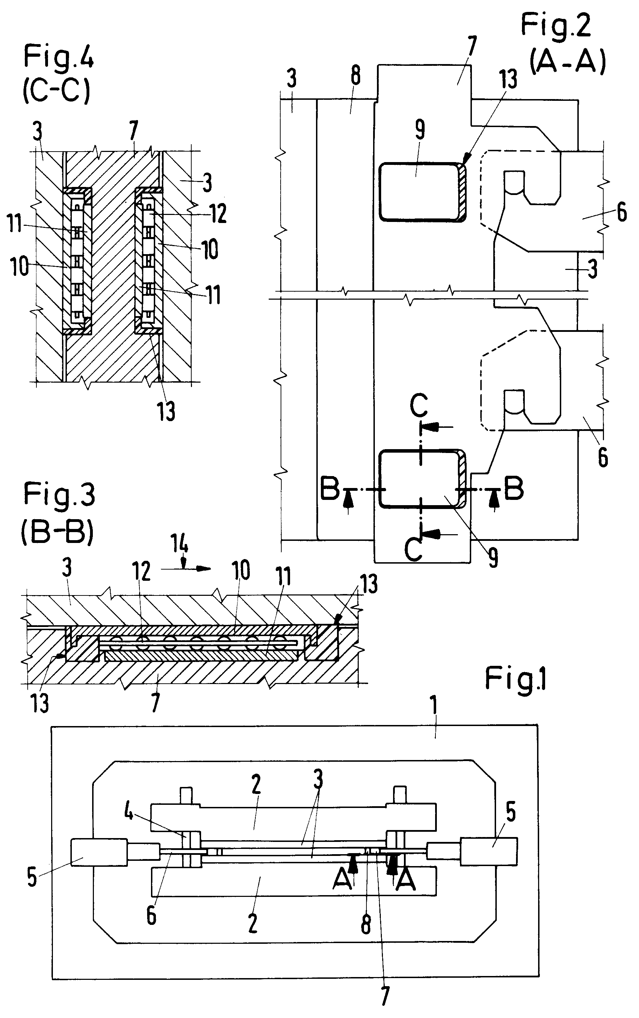

Es zeigen
- Fig. 1: eine prinzipielle Darstellung einer breitenverstellbaren Stranggießkokille in der Draufsicht,
- Fig. 2: eine vergrößerte Ansicht einer Schmalseitenplatte gemäß A-A nach Fig. 1,
- Fig. 3: einen vergrößerten Ausschnitt gemäß B-B nach Fig. 2 und
- Fig. 4: eine Seitenansicht in vergrößertem Maßstab gemäß C-C nach Fig. 2.

In den Zeichnungen sind gleiche Teile mit gleichen Bezugszeichen versehen.

Auf einem Kokillen- bzw. Tragrahmen 1 ist eine aus Breitseitenplatten 3 und Schmalseitenplatten 7, 8 bestehende Stranggießkokille einschließlich des zur Kühlung der Kokillenplatten notwendigen Wasserkastens 2 angeordnet. Die Schmalseitenplatten, die aus Endplatten 8 (Kupferplatten) und Endplattenträgern 7 bestehen, sind zwischen den Breitseitenplatten 3 eingeklemmt. Die Klemmkraft wird über die Breitseitenplatten 3 verbindende federbelastete Zuganker 4 aufgebracht. Die Schmalseitenplatten 7, 8 sind an einer Aufnahme 6 lösbar befestigt.

Die Aufnahmen 6 stehen mit Verstelleinrichtungen 5 für die Einstellung von Lage und Konizität der Schmalseitenplatten 7, 8 in Verbindung. Die Verstelleinrichtungen 5 sind auf dem Tragrahmen 1 befestigt. Gemäß der Erfindung sind nun in den den Breitseitenplatten 3 gegenüberliegenden Seitenflächen der Endplattenträger 7 in deren oberen und unteren Bereich Linearlager 9 derart angeordnet, daß sie geringfügig aus der Seitenoberfläche hervorstehen und die Seitenoberflächen der Endplattenträger 7 mit den Breitseitenplatten 3 enge Spalte bilden, so daß die über die Zuganker 4 auf die Schmalseitenplatten 7, 8 aufgebrachten Klemmkräfte nur von den Linearlagern 9 aufgenommen werden und diese in Verbindung mit den Endplattenträgern 7 die Breitseitenplatten distanzieren.

Dadurch wird erreicht, daß während des Gießens die Endplatten 8 mit ihren Seitenflächen drucklos an den Breitseitenplatten 3 anliegen und ihre durch die Verstelleinrichtung 5 vorgegebene, definierte Lage beibehalten, auch wenn die Breitseitenplatten 3 durch thermische Belastung eine Längenänderung erfahren sollten.

Die Linearlager 9 sind in Ausnehmungen in den Seitenflächen der Endplattenträger 7 eingesetzt. Sie bestehen aus einer in der Ausnehmung fixierten Druckplatte 11, einem aus der Ausnehmung hervorstehenden Druckdeckel 10 und zwischen Druckplatte 11 und Druckdeckel 10 in einem Käfig angeordneten Zylinderrollen 12, wobei die Zylinderrollen derart angeordnet sind, daß ihre Achsen senkrecht zur Bewegungsrichtung 14 der Breitseitenplatten bzw. der Stellrichtung der Schmalseitenplatten 7, 8 stehen.

Der Druckdeckel 10 ist in Richtung der Bewegungsrichtung 14 kürzer als die Länge der das Linearlager 9 aufnehmenden Ausnehmung und der verbleibende Zwischenraum ist mit einem Elastomer 13 ausgefüllt, das zum einen die Zylinderrollen und die Lagerflächen gegen Schmutz schützt und zum anderen die Bewegungsfreiheit des Druckdeckels 10 gegenüber der Druckplatte 11 und damit die Bewegungsmöglichkeit der Schmalseitenplatten 7, 8 gegenüber den Breitseitenplatten 3 sicherstellt.

Die Erfindung bietet den Vorteil, daß mit einfachen Mitteln auf eine sonst erforderliche, kostspielige hydraulische Regelung verzichtet werden kann. Die Breitseitenplatten können sich vom Anpreßdruck unabhängig an den Schmalseitenplatten vorbei störungsfrei ausdehnen, ohne die Konizität der Schmalseitenplatten zu verstellen.

### Bezugszeichenliste

- 1: Tragrahmen
- 2: Wasserkasten
- 3: Breitseitenplatten
- 4: Zuganker
- 5: Verstelleinrichtung für Schmalseitenplatten
- 6: Aufnahme für Schmalseitenplatten
- 7: Endplattenträger der Schmalseitenplatten
- 8: Endplatte der Schmalseitenplatten
- 9: Linearlager
- 10: Druckdeckel
- 11: Druckplatte
- 12: Zylinderrollen
- 13: Elastomer
- 14: Bewegungsrichtung der Breitseitenplatten

## Patentansprüche

1. Stranggießkokille mit zwischen Breitseitenplatten (3) angeordneten Schmalseitenplatten (7, 8), die durch über Zuganker (4) auf die Breitseitenplatten aufgebrachte Klemmkräfte gehalten sind und die aus einer den Formhohlraum an den Schmalseiten begrenzenden Endplatte (8) und einem Endplattenträger (7) bestehenden Schmalseitenplatten über eine Aufnahme und eine Verstelleinrichtung (5) auf ein Strangformat einstellbar sind,
dadurch gekennzeichnet,
daß in den an die Breitseitenplatten (3) angrenzenden Seitenflächen der Endplattenträger (7) im oberen und unteren Bereich Ausnehmungen eingearbeitet sind, in den Ausnehmungen Linearlager (9) derart eingesetzt sind, daß sie die Breitseitenplatten (3) distanzieren und die auf die Breitseitenplatten aufgebrachten Klemmkräfte aufnehmen.

2. Stranggießkokille nach Anspruch 1,
dadurch gekennzeichnet,
daß das Linearlager (9) aus einer Druckplatte (11) besteht, die in der Ausnehmung befestigt ist und einem Druckdeckel (10), der in Bewegungsrichtung (14) der Breitseitenplatten (3) kürzer ist als die Länge der Ausnehmung in dieser Richtung und der verbleibende Zwischenraum mit einem Elastomer (13) ausgefüllt ist und zwischen der Druckplatte (11) und dem Druckdeckel (10) Wälzkörper angeordnet sind.

3. Stranggießkokille nach den Ansprüchen 1 und 2,
dadurch gekennzeichnet,
daß die Wälzkörper von Zylinderrollen (12) gebildet sind, deren Achsen senkrecht zur Versteilrichtung der Schmalseitenplatten (7,8) liegen.

4. Stranggießkokille nach den Ansprüchen 1 bis 3,
dadurch gekennzeichnet,
daß die Fläche des Druckdeckels (10) so bemessen ist, daß der pro Flächeneinheit von der Breitseitenklemmung übertragene Druck niedriger ist als die Druckfestigkeit des Werkstoffes der Breitseitenwände (3).

## Claims

1. A continuous-casting mould, comprising narrow side plates (7, 8) arranged between broad side plates (3), which narrow side plates are held by clamping forces applied to the broad side plates via tie rods (4) and the narrow side plates consisting of an end plate (8) defining the moulding cavity on the narrow sides and an end-plate support (7) are adjustable to a billet format via a holder and an adjustment device (5),
characterised in that
recesses are formed in the upper and lower region in the side faces of the end-plate support (7) adjoining the broad side plates (3), linear bearings (9) are inserted into the recesses such that they space apart the broad side plates (3) and absorb the clamping forces applied to the broad side plates.

2. A continuous-casting mould according to Claim 1, characterised in that the linear bearing (9) consists of a pressure plate (11) which is fastened in the recess, and a pressure cover (10) which is shorter in the direction of movement (14) of the broad side plates (3) than the length of the recess in this direction, and the remaining gap is filled with an elastomer (13) and rolling elements are arranged between the pressure plate (11) and the pressure cover (10).

3. A continuous-casting mould according to Claims 1 and 2, characterised in that the rolling elements are formed by cylindrical rollers (12), the axes of which lie at right-angles to the direction of adjustment of the narrow side plates (7, 8).

4. A continuous-casting mould according to Claims 1 to 3, characterised in that the surface of the pressure cover (10) is sized such that the pressure transmitted per unit of surface area by the broad-side clamping is lower than the compressive strength of the material of the broad side walls (3).

## Revendications

1. Coquille de coulée continue comportant des plaques de côté mince (7,8) agencées entre des plaques de côté large (3) et maintenues par des forces de serrage engendrées par l'intermédiaire de tirants d'ancrage (4) sur les plaque de côté large, et les plaque de côté mince constituées d'une plaque d'extrémité (8) limitant l'espace creux du moule sur les côtés minces et d'un support de plaque d'extrémité (7) pouvant être réglées, par l'intermédiaire d'une réception et d'un dispositif de réglage (5), sur un format de barre,
caractérisée en ce que des évidements sont pratiqués sur les faces latérales du support de plaque d'extrémité (7), adjacentes des plaques de côté large (3), dans les zones supérieure et inférieure, des paliers linéaires (9) sont montés dans les évidements de manière à écarter les plaques de côté large (3) et à recevoir les forces de serrage engendrées sur les plaques de côté large.

2. Coquille de coulée continue selon la revendication 1,
caractérisée en ce que le palier linéaire (9) est constitué d'une plaque de pression (11) fixée dans l'évidement et d'un couvercle de pression (10) qui est plus court, en direction de mouvement (14) des plaques de côté large (3), que la longueur de l'évidement dans cette direction, et l'espace intermédiaire restant est rempli par un élastomère (13) et des corps de roulement sont agencés entre la plaque de pression (11) et le couvercle de pression (10).

3. Coquille de coulée continue selon l'une des revendications 1 et 2,
caractérisée en ce que les corps de roulement sont formés de galets cylindriques (12), dont les axes sont situés orthogonalement à la direction de réglage des plaques de côté mince (7,8).

4. Coquille de coulée continue selon l'une des revendications 1 à 3,
caractérisée en ce que la surface du couvercle de pression (10) est dimensionnée de sorte que la pression transmise par le serrage des côtés larges, par unité de surface, est plus faible que la résistance à la pression du matériau des parois de côté large (3).
